# EUROPEAN PATENT APPLICATION

(11) **EP 1 686 799 A2**
(43) Date of publication of application: **02.08.2006**
(21) Application number: 06290157.4
(22) Date of filing: 26.01.2006
(51) Int. Cl.: H04N 5/445, H04N 7/088

(54) **Apparatus for receiving a broadcast and method for alerting a user of the broadcast**

(30) Priority: 01.02.2005 KR 2005009061
(71) Applicant: LG Electronics, Inc., Seoul 150-875 (KR)
(72) Inventor: Jung, Su Won, 206-502, Hansolmaeul LG Apt., Seongnam-si Gyeonggi-do 463-909 (KR)
(74) Representative: Loisel, Bertrand

(57) **Abstract**

An apparatus and method for receiving a broadcast and alerting a user of the broadcast, are discussed. According to an embodiment, the method includes determining if periodic information indicating that a program is periodically broadcast exists in a received broadcast signal; registering the program with program viewing information if the determining step determines that the periodic information on the program exists in the broadcast signal; and alerting a user of a broadcasting time of the program prior to the broadcasting time of the program based on the program viewing information.

## Description

This application claims the priority benefit of the Korean Patent Application No. 10-2005-0009061, filed on February 1, 2005, which is hereby incorporated by reference as if fully set forth herein.

### BACKGROUND OF THE INVENTION

### Field of the Invention

The invention relates to an apparatus and method for receiving a broadcast and alerting a user of the broadcast.

### Discussion of the Related Art

A broadcast receiving apparatus according to a related art requires a user to tune in to a specified channel containing a periodically broadcasting program at the specified broadcasting time of the program, in order for the user to watch the program. For instance, the user needs to remember the designated broadcasting time of a desired program, and tune his broadcast receiving/playing apparatus to a broadcast channel carrying the program at the designated broadcasting time. Otherwise, it requires the user to make a prior arrangement (e.g., pre-set up for recording) to tune in to the specified channel containing the periodically broadcasting program, so that the program can be viewed later.

To give an example, if an "ABCD" drama is periodically broadcast, e.g., one episode every week, then the user, e.g., by controlling his broadcast receiving apparatus, has to tune in to a channel containing the drama once a week at the broadcasting time which he has memorized to watch the drama. Otherwise, the user has to make a prior arrangement to tune in to the channel containing the drama at the broadcasting time of the drama.

However, the related art broadcast receiving apparatus has a disadvantage in that a user will completely miss viewing his desired program such as a periodically broadcast program) if the user cannot remember or forgets the designated broadcasting time of the program or if the user is not aware of the current time which matches the designated broadcasting time of the program. Thus, in the related art broadcast receiving apparatus, the user has to memorize the designated broadcasting time of his desired program, and has to be aware of the current time, whenever the user wants to watch the program. This is extremely inconvenient to the user and often difficult to do. As a result, with busy life styles, the user will often miss viewing his favorite program.

### SUMMARY OF THE INVENTION

An object of the present invention is to provide an apparatus and method for receiving a broadcast and automatically alerting a user of the broadcast, which the user has continually or periodically watched.

Another object of the present invention is to provide an apparatus and method for receiving a broadcast and automatically alerting a user of the broadcast, which address the limitations and disadvantages associated with the related art.

According to an aspect of the present invention, there is provided a method for alerting a user of a broadcast, the method comprising: determining if periodic information indicating that a program is periodically broadcast exists in a received broadcast signal; registering the program with program viewing information if the determining step determines that the periodic information on the program exists in the broadcast signal; and alerting a user of a broadcasting time of the program prior to the broadcasting time of the program based on the program viewing-information.

According to another aspect of the present invention, there is provided a method for alerting a user of a broadcast, the method comprising: determining if periodic information indicating that a program is periodically broadcast exists in a received broadcast signal and if a program is played for at least a specified amount of time; registering the program with program viewing information, if the determining step determines that the program is a periodically broadcast program and is played for at least the specified amount of time; and alerting a user of the program before the program begins based on the program viewing information.

According to another aspect of the present invention, there is provided a method for alerting a user of a broadcast program, the method comprising: determining if a program is scheduled to be periodically broadcast, using a broadcast signal; determining if the program is a program viewed by a user for at least a certain duration of time; and selectively alerting a user about an upcoming broadcast time of the program based on results of the determining steps.

According to another aspect of the present invention, there is provided a broadcast receiving apparatus comprising: a system information (SI) decoder to parse received SI data; a storing unit to store information on a program as program viewing information if periodic information indicating whether the program is periodically broadcast is included in the information parsed by the SI decoder; a controlling unit to examine the program viewing information and to generate a control signal pertaining to an upcoming broadcasting time of the program based on the program viewing information; and an alerting unit to alert the upcoming broadcasting time of the program based on the control signal received from the controlling unit.

According to another aspect of the present invention, there is provided an apparatus for alerting a user of a broadcast, the apparatus comprising: a controller to determine if periodic information indicating that a program is periodically broadcast exists in a received broadcast signal, and to register the program with program viewing information if it is determined that the periodic information on the program exists in the broadcast signal; and an alerting unit to alert a user of a broadcasting time of the program prior to the broadcasting time of the program based on the program viewing information.

According to another aspect of the present invention, there is provided an apparatus for alerting a user of a broadcast, the apparatus comprising: a controller to determine if periodic information indicating that a program is periodically broadcast exists in a received broadcast signal and if a program is played for at least a specified amount of time, and to register the program with program viewing information if it is determined that the program is a periodically broadcast program and is played for at least the specified amount of time; and an alerting unit to alert a user of the program before the program begins based on the program viewing information.

According to another aspect of the present invention, there is provided an apparatus for alerting a user of a broadcast program, the apparatus comprising: a controller to determine, using a broadcast signal, if a program is scheduled to be periodically broadcast, and to determine if the program is a program viewed by a user for at least a certain duration of time; and an alerting unit to selectively alert a user about an upcoming broadcast time of the program, based on results of the determining by the controller.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a flow chart illustrating one embodiment of a method for alerting a user of a program according to the present invention;

Fig. 2 is an example of a program viewing information according to an embodiment of the present invention;

Fig. 3A is an example of information showing periodicity of a program at user private descriptor fields of SI data according to the present invention;

Fig. 3B is a specific example of the information having the format of Fig. 3A; and

Fig. 4 is an exemplary configuration of one embodiment of a broadcast receiving apparatus according to the present invention.

### DETAILED DESCRIPTION OF THE PREFERRED EMBODIMENTS

Reference will now be made in detail to the preferred embodiments of the present invention, examples of which are illustrated in the accompanying drawings.

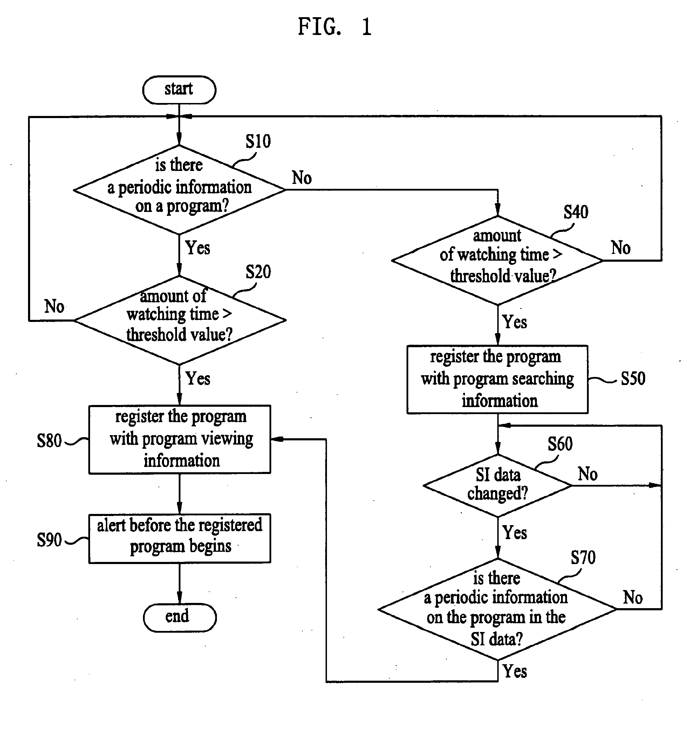

FIG. 1 is a flow chart illustrating one embodiment of a method for alerting a user of a program according to the present invention.

First, a program is determined if a user periodically (or frequently) watches the program or a part thereof. Determination like this may be made on all programs on channels available to the user. A periodically viewed/broadcast program can be a program that is generally regularly broadcast with different episodes/segments of the program. Examples of such program can be a nightly news that is broadcast each night, a mini-series that is broadcast weekly, Monday night football that is broadcast every Monday night, etc.

A broadcast transmitting terminal may transmit a program, with periodic information on the program. The periodic information can be included in SI (system information) data contained in a broadcasting signal carrying the program. The broadcasting transmitting terminal can be a base station, a network station, etc.

The periodic information may be used to determine if the program is periodically broadcast on a channel. Accordingly, a user's broadcast receiving/playing apparatus checks whether or not there is a periodic information included in the SI data contained in the received broadcast signal, before the channel that a user watches is changed (S10).

Preferably, the apparatus may determine if the program is watched by a user for at least (no less than) a specific amount of time if it turns out that a received program is a program that periodically broadcasts (S20). Whether a user watches a program for at least a specified amount of time can be determined using a threshold value. The threshold value may be predetermined or temporarily set by a user.

If it is determined that the user does not continue to watch the program for at least the amount of time equal to the threshold value ("No" at step S20), e.g., if the user changes a channel from the currently viewed channel/program, the apparatus may additionally determine if the program on the new channel has been viewed by the user for at least the amount of time equal to the threshold value. That is, the method returns to step S10.

On the other hand, if it is determined that the user continues to watch the program for at least the amount of time equal to the threshold ("Yes" at step S20), then the continuously-watched program may be registered with program viewing information (S80). In this embodiment, the program viewing information may be in the format of a list, in which case the program viewing information is also referred to herein as a program viewing list. At step S80, the registering step may involve storing the currently-viewed program information (e.g., program name, program broadcast time, program channel, etc.) as part of the program viewing information.

Subsequently, the apparatus checks the program viewing information including a list of registered programs and the corresponding program information, frequently or continuously, and determines if there is any upcoming program to be broadcast in the near future. If so, before the actual broadcasting time of the program, the apparatus is configured to alert the user about the upcoming program in order for the user to tune in to a channel broadcasting the program at or around the broadcasting time of the program (S90).

The alerting in step S90 can be adjusted according to the user's preference. For instance, the user can set, e.g., using the broadcast receiving apparatus, how often the user should be alerted and the manner (e.g., audio and/or visual) in which the user should be alerted. The user can also set how far in advance the user should be alerted of the user's desired program. Also, the apparatus may be configured so that the user can view the program viewing information and modify the list therein as desired.

On the other hand, if the apparatus determines that there is no periodic information indicating the program is a program that periodically broadcasts, in SI data associated with the currently-viewed program ("No" at step S10), the apparatus checks whether the user has been viewing the program for a specified amount of time (S40). Whether a user watches a program for at least a specified amount of time can be determined using a threshold value, similar to step S20. This threshold value at step S40 may be predetermined or temporarily set by the user, and can be the same as or different from the threshold value of step S20.

If the amount of time which the user watches the program exceeds the threshold value ("Yes" at S40), the program is registered with program searching information (S50). The program searching information may be in the format of a list in which case, the program searching information can be referred to as a program searching list. The program searching information can include program information such as program name, program broadcast time, channel on which the program is broadcast, etc.

Once the program is registered in the program searching information, the apparatus determines if there is any change in the received SI data (S60). If so, it is determined whether the same channel, start time, and title (program name) as those of the programs registered with the program searching list exist in the received (changed) SI data (S70). As a variation, only the same program name may be checked or any parameter that identifies a program.

If the same channel, start time, and title as those of the programs registered with the program searching list exist in the changed SI data ("Yes" at step S70), the program registered with the program searching list may be registered with the program viewing list (S80). That is, the process turns to step S80 and follows the flowchart.

Alternatively, SI data on programs may periodically be changed, and the programs may be registered with the program viewing information if there are changes in the periodic information of the SI data pertaining to the programs registered with the program searching information (S80).

If it is determined at step S40 that the amount of viewing time of the current program does not exceed the threshold value, then the process returns to step S10.

According to the present invention, the apparatus is configured to automatically check for any program that the user views periodically and to automatically alert the user of the upcoming broadcasting of the program.

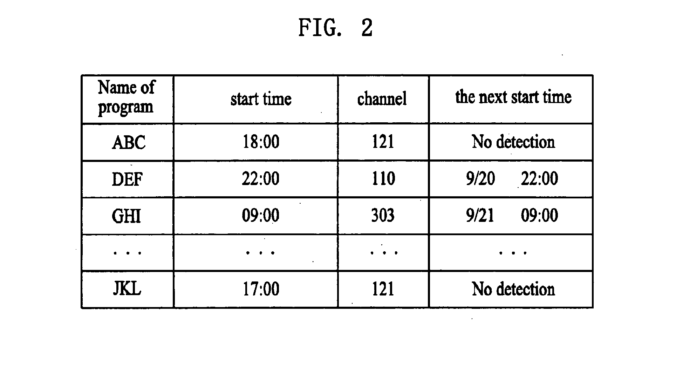

FIG. 2 is an example of a program viewing list according to one embodiment of the present invention. The program viewing list, as shown in FIG. 2, may contain information such as a title, a broadcasting time, a channel, and a next broadcasting time of a program as part of the registered program viewing information. For instance, a title ("DEF") of a program that is periodically broadcast may be registered, and information such as a broadcasting time ("22:00"), a channel ("110") and a next broadcasting time ("9/20 22:00") of the program may be registered with the program viewing list according to the title of the program. Other variations are possible.

If information on a program in the SI data indicates that the program periodically broadcasts, a next broadcasting time of the program may be identified in the SI data based on the title of the program. However, if information on the program in the SI data does not indicate that the program periodically broadcasts, a sign "NO DETECTION" may be displayed or indicated, or an indicating sign may remain empty.

A program may be registered in the program viewing information if the program is periodically broadcast. Therefore, it may be necessary to use some fields of the SI data to indicate whether a program is periodically broadcast. That is, information on whether a program is periodically broadcast may be included at a designated area/field within a broadcasting signal so that a broadcast receiving apparatus knows where to access this information.

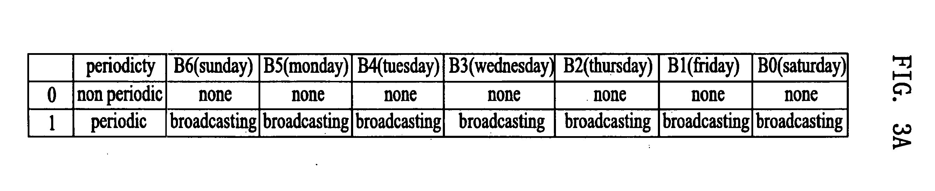

Fig. 3A is an example of information indicating periodicity of a program as stored in user private descriptor fields of SI data. In the example of FIG. 3A, the periodicity of the program is expressed as a flag byte and stored in a certain field of SI data. The periodicity information may be stored in any designated area within a broadcast signal.

A broadcast transmitting terminal may set this flag byte in the SI data, and the periodicity or non-periodicity of the program may be expressed as a bit value according to the day of the week, as shown in FIG. 3A.

More specifically, information as to what day of the week the program is broadcast and as to whether the program is periodically broadcast on the day of the week may be expressed as a flag value.

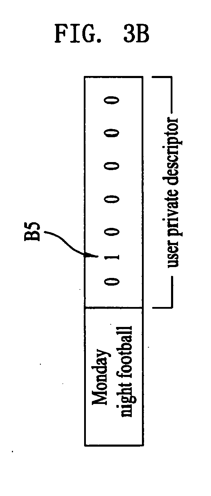

In FIG. 3A, a program flag byte indicates whether or not a program is periodically broadcast from Sunday through Saturday. Bits B6, B5, B4, B3, B2, B1, and B0 of this program flag represent the days of the week if the program can be broadcasted. Periodic information such as "0" and "1" may be assigned according to the day of the week. For instance, as shown in FIG. 3B, a program called "Monday Night Football" may have the program flag having the bits "0100000" wherein "1" value indicates that this program is broadcast every Monday (B5). Other variations are possible.

In the method of alerting a user of a broadcast according to the present invention, a user may be alerted of broadcasting times of programs in the order in which the programs registered with the program viewing list begin, before each program begins. If desired, the user may be alerted of the broadcasting time, the channel and title of the program, well before the scheduled broadcasting time of the program.

The method of alerting a user of a broadcasting time of a program according to the present invention may be through a visual presentation of signs, icons, characters, HTML, etc. to an alerting screen, through a generation of audio alerting signal, or through both. Here, if the user is currently viewing something on the screen of a broadcast receiving apparatus or if the broadcast receiving apparatus is turned on, then the alert signal/indication may be displayed on the screen of the broadcasting receiving apparatus or audibly played through the broadcasting receiving apparatus. If the broadcasting receiving apparatus is a portable device such as a mobile phone, a PDA, etc., then the device may be generally turned on and the user can be notified through the device.

A broadcasting time of a program may be alerted before the program begins, if the broadcast information on the program exists in the SI data. An alerting signal may be generated for a user because a set top box can receive the SI data while the power is turned off.

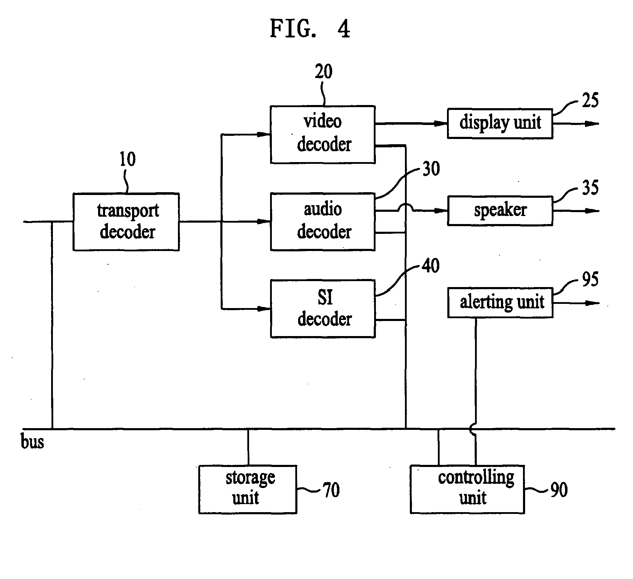

Fig. 4 is an exemplary configuration of one embodiment of apparatus for receiving and/or alerting a broadcast in accordance with the present invention.

As shown in Fig. 4, the broadcast receiving apparatus includes a transport decoder 10 that converts a received signal (e.g., a broadcast signal) into a transport stream and outputs the transport stream. A video decoder 20 decodes video data obtained from the transport stream and outputs the decided video data to a displaying unit 25 for displaying. An audio decoder 30 decodes audio data obtained from the transport stream and outputs the decoded audio data to a speaker 35 for audio playing.

A SI decoder 40 parses SI data contained in the transport stream, and generates and outputs program viewing information indicating periodic broadcast of program(s) from the parsed information, to a storing unit 70 to store the program viewing information. The program viewing information is updated continuously or regularly as a new broadcast signal having new/updated SI data is received.

A controlling unit 90 searches for the program viewing information stored in the storing unit 70, and outputs a broadcasting time (and other information) of the program to an alerting unit 95 for alerting a user. For instance, the controlling unit 90 outputs information on a start time of an "ABCD" program to the alerting unit 95. Then the alerting unit 95 alerts the user according to its alert indication setting, which may be set or modified by a user or the apparatus.

The storing unit 70 may also store, for example, program searching information including information on an "ABCD" program that a user watches for at least a specific amount of time, although periodic information on the program does not exist in the SI data.

In that case, the controlling unit 90 determines if there is a change in the periodic information on the ABCD program among program information parsed by the SI decoder 40.

In FIG. 4, the alerting unit 95, the displaying unit 25, and the speaker 35 of the broadcast receiving apparatus are separate units. But, the alerting unit 95 may be the displaying unit 25, the speaker 35, or both. That is, the displaying unit 25 and/or the speaker 35 of the broadcast receiving apparatus can be used as means to alert the user, or other display unit and/or audio unit may be used to alert the user. In the latter case, the alerting unit 95 is configured to communicate with the other display unit and/or audio unit (e.g., via network, wireless, etc.) so that the user can be alerted. Also, in cases where the broadcast receiving apparatus is currently turned off, then the apparatus may operate on stored or battery power to cause the alerting unit 95 to alert the user as needed.

All the components of the broadcast receiving apparatus, such as one shown in Fig. 4, are operatively coupled. The broadcast receiving apparatus can be a digital TV, a set top box (coupled to a display such as a TV), a PC or workstation, a notebook computer, a mobile terminal such as a mobile phone or PDA, etc. Also in the step S20 or S40 of determining the viewing time length of a program, it may be based on the length of time the apparatus is tuned to a channel, and not necessarily whether or not the user is actually watching the program.

An apparatus and method for receiving a broadcast and/or alerting a user of the broadcast in accordance with the present invention provide an advantage of automatically alerting a user of a program that the user periodically watches without the user's awareness of the program broadcast time or current time. This is convenient to the user and is beneficial to the program providers and associated advertisers since the user is less likely to miss the program viewing.

It will be apparent to those skilled in the art various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for alerting a user of a broadcast, the method comprising:
determining if periodic information indicating that a program is periodically broadcast exists in a received broadcast signal;
registering the program with program viewing information if the determining step determines that the periodic information on the program exists in the broadcast signal; and
alerting a user of a broadcasting time of the program prior to the broadcasting time of the program based on the program viewing information.

2. The method of claim 1, wherein the periodic information is located in a system information (SI) data field of the broadcast signal.

3. The method of claim 2, wherein the SI data field is a user private descriptor field associated with SI data.

4. The method of claim 1, wherein the program viewing information includes at least one of the following:
a name of the program,
a broadcasting time of the program,
a broadcasting channel containing the program, or
a next broadcasting time of the program.

5. A method for alerting a user of a broadcast, the method comprising:
determining if periodic information indicating that a program is periodically broadcast exists in a received broadcast signal and if a program is played for at least a specified amount of time;
registering the program with program viewing information, if the determining step determines that the program is a periodically broadcast program and is played for at least the specified amount of time; and
alerting a user of the program before the program begins based on the program viewing information.

6. The method of claim 5, wherein the periodic information is located in a system information (SI) data field of the broadcast signal.

7. The method of claim 6, wherein the SI data field is a user private descriptor field associated with SI data.

8. The method of claim 7, wherein the periodic information on each of programs is expressed as a flag byte in the user private descriptor field.

9. The method of claim 5, wherein the alerting step is performed by generating a visual alerting signal and/or an audio alerting signal.

10. The method of claim 5, further comprising:
registering the program with program searching information if the determining step determines that the program is not a periodically broadcast program and is played for at least the specified amount of time.

11. The method of claim 10, further comprising:
determining if there is a change in the periodic information regarding the program registered with the program searching information; and
registering the program registered with the program searching information, in the program viewing information, if the change in the periodic information indicates that the program is now a periodically broadcast program.

12. The method of claim 5, wherein the program viewing information is stored in the format of a list according to a name of the program.

13. A method for alerting a user of a broadcast program, the method comprising:
determining if a program is scheduled to be periodically broadcast, using a broadcast signal;
determining if the program is a program viewed by a user for at least a certain duration of time; and
selectively alerting a user about an upcoming broadcast time of the program based on results of the determining steps.

14. The method of claim 13, wherein the selectively alerting step alerts the user about the upcoming broadcast time of the program, if the determining steps determine that the program is scheduled to be periodically broadcast and that the program is viewed by the user for at least the certain duration of time.

15. The method of claim 13, wherein the step of determining if the program is scheduled to be periodically broadcast includes examining SI (system information) data contained in the broadcast signal.

16. The method of claim 13, further comprising:
storing information about the program as part of program searching information, if the determining steps determine that the program is not scheduled to be periodically broadcast and that the program is viewed by the user for at least the certain duration of time.

17. The method of claim 16, wherein the information about the program stored in the program searching information is stored as program viewing information and the program viewing information is used in the selectively alerting step to alert the user, if a periodicity status of the program changes.

18. A broadcast receiving apparatus comprising:
a system information (SI) decoder to parse received SI data;
a storing unit to store information on a program as program viewing information if periodic information indicating whether the program is periodically broadcast is included in the information parsed by the SI decoder;
a controlling unit to examine the program viewing information and to generate a control signal pertaining to an upcoming broadcasting time of the program based on the program viewing information; and
an alerting unit to alert the upcoming broadcasting time of the program based on the control signal received from the controlling unit.

19. The apparatus of claim 18, wherein the storing unit stores the information on the program as program searching information if the program received by the broadcast receiving apparatus is displayed for at least a specified amount of time.

20. The apparatus of claim 18, wherein the controlling unit outputs the control signal to alert the upcoming broadcasting time of the program, if the SI decoder parses the periodic information on the program associated with the program searching information from the received SI data.

21. The apparatus of claim 18, wherein the SI decoder parses the periodic information from a user private descriptor field of the SI data.

22. The apparatus of claim 18, wherein the alerting unit is a displaying unit displaying a video signal to a screen and/or a speaker outputting an audio signal.

23. An apparatus for alerting a user of a broadcast, the apparatus comprising:
a controller to determine if periodic information indicating that a program is periodically broadcast exists in a received broadcast signal, and to register the program with program viewing information if it is determined that the periodic information on the program exists in the broadcast signal; and
an alerting unit to alert a user of a broadcasting time of the program prior to the broadcasting time of the program based on the program viewing information.

24. An apparatus for alerting a user of a broadcast, the apparatus comprising:
a controller to determine if periodic information indicating that a program is periodically broadcast exists in a received broadcast signal and if a program is played for at least a specified amount of time, and to register the program with program viewing information if it is determined that the program is a periodically broadcast program and is played for at least the specified amount of time; and
an alerting unit to alert a user of the program before the program begins based on the program viewing information.

25. The apparatus of claim 24, wherein the controller registers the program with program searching information if it is determined that the program is not a periodically broadcast program and is played for at least the specified amount of time.

26. The apparatus of claim 25, wherein the controller determines if there is a change in the periodic information regarding the program registered with the program searching information, and registers the program registered with the program searching information, in the program viewing information, if the change in the periodic information indicates that the program is now a periodically broadcast program.

27. An apparatus for alerting a user of a broadcast program, the apparatus comprising:
a controller to determine, using a broadcast signal, if a program is scheduled to be periodically broadcast, and to determine if the program is a program viewed by a user for at least a certain duration of time; and
an alerting unit to selectively alert a user about an upcoming broadcast time of the program, based on results of the determining by the controller.

28. The apparatus of claim 27, wherein the alerting unit alerts the user about the upcoming broadcast time of the program, if the controller determines that the program is scheduled to be periodically broadcast and that the program is viewed by the user for at least the certain duration of time.

29. The apparatus of claim 27, wherein the controller determines if the program is scheduled to be periodically broadcast, by examining SI (system information) data contained in the broadcast signal.

30. The apparatus of claim 27, further comprising:
a storage unit to store information about the program as part of program searching information, if the controller determines that the program is not scheduled to be periodically broadcast and that the program is viewed by the user for at least the certain duration of time.

31. The apparatus of claim 30, wherein the controller stores the information about the program stored in the program searching information as program viewing information and uses the program viewing information to alert the user, if a periodicity status of the program changes.
